(19) Europäisches Patentamt / European Patent Office / Office européen des brevets

(11) **EP 4 693 692 A1**

(12) **EUROPEAN PATENT APPLICATION**
published in accordance with Art. 153(4) EPC

(43) Date of publication:
**11.02.2026 Bulletin 2026/07**

(21) Application number: **24846017.2**

(22) Date of filing: **23.07.2024**

(51) International Patent Classification (IPC):
*H01M 50/489* (2021.01)   *H01M 50/446* (2021.01)
*H01M 50/449* (2021.01)   *H01M 50/46* (2021.01)
*H01M 50/403* (2021.01)

(52) Cooperative Patent Classification (CPC):
**H01M 50/403; H01M 50/446; H01M 50/449;**
**H01M 50/46; H01M 50/489;** Y02E 60/10

(86) International application number:
**PCT/KR2024/010645**

(87) International publication number:
**WO 2025/023715 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.07.2023 KR 20230097767**

(71) Applicant: **LG Energy Solution, Ltd.**
**Seoul 07335 (KR)**

(72) Inventors:
• **BAE, Kyeong-Hui**
  **Daejeon 34122 (KR)**
• **LEE, So-Yeong**
  **Daejeon 34122 (KR)**
• **BAK, Byeong-Chan**
  **Daejeon 34122 (KR)**
• **BAE, Won-Sik**
  **Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR SUBSTRATE, PREPARATION METHOD THEREOF, AND SEPARATOR INCLUDING SAME**

(57)    The present disclosure relates to a separator substrate, a separator, an electrode assembly and an electrochemical device, and the separator substrate according to an embodiment of the present disclosure has different surface characteristics of two surfaces. Accordingly, the separator using the same has different adhesion strength of two surfaces, and the deviation of electrode adhesion strength of a positive electrode and a negative electrode having different adhesion strength is significantly reduced.

FIG. 2

**Description**

TECHNICAL FIELD

The present disclosure relates to a separator substrate, a method for manufacturing the same and a separator including the same. More particularly, the present disclosure relates to a separator with reduced deviation of electrode adhesion strength of two surfaces, and an electrode assembly and an electrochemical device including the same.

The present application claims priority to Korean Patent Application No. 2023-0097767 filed on July 26, 2023 in the Republic of Korea, the disclosure of which is incorporated herein by reference.

BACKGROUND

A lithium secondary battery is manufactured through a process of inserting an electrode assembly including a positive electrode/a separator/a negative electrode into a battery case, injecting an electrolyte solution and sealing the battery case. The separator for use in the lithium secondary battery generally includes a polyolefin-based porous substrate, and to solve a short-circuit problem of the positive electrode and the negative electrode by thermal shrinkage behaviors of the polyolefin-based porous substrate, a separator having a coating layer formed from a mixture of inorganic particles and a binder polymer on the surface of the porous substrate, known as a Safety Reinforced Separator (SRS) has been developed to improve the strength and heat resistance of the separator.

Because the inorganic particles in the coating layer act as a spacer to maintain the physical shape of the separator, when the SRS is exposed to high temperature, it may be possible to suppress the shrinkage of the porous substrate, thereby preventing direct contact between the positive electrode and the negative electrode. Accordingly, the electrode assembly is manufactured by adhering the positive electrode and the negative electrode with the SRS having the porous coating layer on two surfaces between the positive electrode and the negative electrode.

However, when a silicon (Si)-based active material is used as a negative electrode active material, compared to the use of a graphite-based active material, the separator-negative electrode adhesion strength is high due to large roughness of the silicon-based active material, but the separator-positive electrode adhesion strength is low due to small roughness of the positive electrode active material. When the adhesion strength between the separator and the electrode is low, there is a risk that the structure of the electrode assembly will be distorted or twisted when assembling the cell, and when a difference in adhesion strength between the separator and the positive electrode and the negative electrode is large, there is a problem with bending of the cell. Accordingly, there is a need for development of technology for improving the adhesion strength between the separator and the two electrodes.

DISCLOSURE

Technical Problem

The present disclosure is directed to providing a separator capable of solving the above-described problems and an electrode assembly and an electrochemical device including the same.

Specifically, the present disclosure is directed to providing a separator having a reduced deviation of adhesion strength with a negative electrode and a positive electrode, and an electrode assembly and an electrochemical device with improved safety using the same.

In particular, the present disclosure is directed to providing a separator substrate having different surface characteristics of two surfaces to reduce the deviation of adhesion strength of a separator with a negative electrode and a positive electrode and a separator including the same.

The present disclosure is further directed to providing an electrode assembly including Si-based particles as a negative electrode active material and an electrochemical device including the same.

Technical Solution

To solve the above-described problems,
according to an aspect of the present disclosure, there is provided a separator substrate of the following embodiments.

The separator substrate according to a first embodiment is,
a porous polymer substrate having different surface roughness of two surfaces.

According to a second embodiment, in the first embodiment,
surface roughness values (Sa) of the two surfaces of the porous polymer substrate may be different from each other.

According to a third embodiment, in the first or second embodiment,
the surface roughness value (Sa) of one of the two surfaces of the porous polymer substrate may be 50 nm or less, and the surface roughness value (Sa) of the opposite surface may be larger than 50 nm.

According to another aspect of the present disclosure, there is provided a separator of the following embodiments.

The separator according to a fourth embodiment may include:

the separator substrate according to any one of the first to third embodiments; and
a porous coating layer present on each of the two surfaces of the separator substrate, the porous coating layer including inorganic particles and a binder polymer.

According to a fifth embodiment, in the fourth embodiment,
the separator may have different adhesion strength of two surfaces, and when the surface having higher adhesion strength is referred to as a first surface, and the surface having lower adhesion strength is referred to as a second surface, a ratio of adhesion strength of the first surface and the second surface according to the following Equation 1 may be 150% or more.

Ratio of adhesion strength (%) = [(the adhesion strength of the first surface/ the adhesion strength of the second surface) $\times$ 100]    [Equation 1]

wherein the adhesion strength is the adhesion strength between the separator substrate and the porous coating layer.

According to a sixth embodiment, in the fourth or fifth embodiment,
the adhesion strength of each of the two surfaces of the separator may be 30 gf/15 mm or more.

According to a seventh embodiment, in any one of the fourth to sixth embodiments,
the adhesion strength of one of the two surfaces of the separator may be 80 gf/15 mm or less, and the adhesion strength of the opposite surface may be more than 80 gf/15 mm. In this instance, the adhesion strength may be the adhesion strength between the separator substrate and the porous coating layer.

According to another aspect of the present disclosure, there is provided an electrode assembly of the following embodiments.

The electrode assembly according to an eighth embodiment may include:
the separator according to any one of the fourth to sixth embodiments, and a positive electrode and a negative electrode, each electrode present on each of the two surfaces of the separator.

According to a ninth embodiment, in the eighth embodiment,
the separator may have different adhesion strength of the two surfaces, and the positive electrode may contact the surface having higher adhesion strength, and the negative electrode may contact the surface having lower adhesion strength.

According to a tenth embodiment, in the eighth or ninth embodiment,

a deviation of electrode adhesion strength of the separator with each of the positive electrode and the negative electrode according to the following Equation 2 may be 10% or less:

[Equation 2]

$$\text{Deviation of electrode adhesion strength (\%)} = \left| \{1 - F_{(x)}/F_{(y)})\} \right| \times 100$$

in the above Equation 2,
$F_{(x)}$ is the electrode adhesion strength between the separator and the positive electrode, and $F_{(y)}$ is the electrode adhesion strength between the separator and the negative electrode, or
$F_{(x)}$ is the electrode adhesion strength between the separator and the negative electrode, and $F_{(y)}$ is the electrode adhesion strength between the separator and the positive electrode.

According to an eleventh embodiment, in any one of the eighth to tenth embodiments,
the negative electrode may include a Si-based active material as an active material.

According to another aspect of the present disclosure, there is provided an electrochemical device of the following embodiments.

The electrochemical device according to a twelfth embodiment may include:
the electrode assembly according to any one of the eighth to eleventh embodiments, and a case accommodating the electrode assembly.

According to another aspect of the present disclosure, there is provided a method for manufacturing a separator substrate of the following embodiments.

The method for manufacturing the separator substrate according to a thirteenth embodiment includes the steps of:

S1) extruding a polymer slurry to obtain a polymer sheet; and

S2) placing the obtained polymer sheet on a casting roll and cooling the polymer sheet,

wherein the step S2 may include cooling the polymer sheet without a touch roll on an opposite surface to a surface of the polymer sheet that contacts the casting roll.

Advantageous Effects

The separator substrate according to an embodiment of the present disclosure may have different surface characteristics of two surfaces, leading to different electrode adhesion strength of two surfaces of the separator using the same.

Accordingly, even if the characteristics of the active materials in the electrodes on the two surfaces of the separator are different from each other, the two surfaces of the separator may have a small deviation of adhesion strength between the separator and the electrode.

Accordingly, it may be possible to reduce or prevent bending caused by the difference in adhesion strength between the separator and the positive electrode and the negative electrode on the two surfaces of the separator, thereby improving safety of the electrochemical device using the same.

The separator substrate and the separator according to an embodiment of the present disclosure may be used in the electrode assembly with improved stability and productivity.

BRIEF DESCRIPTION OF THE DRAWINGS

FIG. 1 is a diagram of an apparatus for manufacturing a separator substrate according to the related art.

FIG. 2 is a diagram of an apparatus for manufacturing a separator substrate according to an embodiment of the present disclosure.

BEST MODE

Hereinafter, the present disclosure will be described in detail.

The term "include" or "comprise" when used in this specification, specifies the presence of stated elements, but does not preclude the presence or addition of one or more other elements, unless the contrary appears from the context.

In the specification, "A and/or B" refers to either A or B or both.

The certain terms used in the following description are provided for convenience but not intended to limit the present disclosure. Additionally, the words indicating directions such as upper, lower, left, right, front, rear, inner and outer indicate a direction in the drawings to which reference is made, or a direction facing or facing away from the geographical center of the stated devices, systems and elements.

**Separator substrate and its manufacturing method**

According to an aspect of the present disclosure, there is provided a separator substrate having different surface roughness of two surfaces as a porous polymer substrate.

To describe this, a feature of a method for manufacturing the separator substrate according to an embodiment of the present disclosure will be described first.

The method for manufacturing the separator substrate according to an aspect of the present disclosure includes the steps of:

S1) extruding a polymer slurry to obtain a polymer sheet; and

S2) placing the obtained polymer sheet on a casting roll and cooling it.

In this instance, according to an aspect of the present disclosure, it is characterized in that the step S2 includes cooling the polymer sheet without a touch roll on the opposite surface to a surface of the polymer sheet that contacts the casting roll.

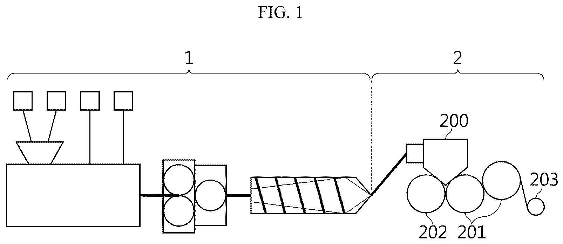

FIG. 1 is a diagram showing an apparatus for manufacturing the conventional separator substrate. FIG. 1 shows an extrusion unit 1 and a cooling unit 2, and in this instance, the cooling unit cools the polymer sheet extruded through a T-die 200 on the casting roll 201 and in this instance, includes the touch roll 202 to support the polymer sheet.

Conventionally, when manufacturing the porous polymer substrate as the separator substrate, the polymer slurry is extruded to obtain the polymer sheet, and the obtained polymer sheet is cooled while one surface is in contact with the casting roll 201 and the other surface is in contact with the touch roll 202 to support the other surface. Accordingly, because the polymer sheet is cooled while the two surfaces are in contact with the casting roll and the touch roll, respectively, the polymer sheet obtained through the cooling has similar surface morphologies of the two surfaces, leading to similar surface roughness of two surfaces of the separator substrate.

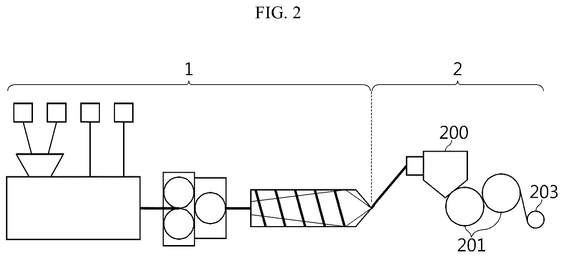

FIG. 2 is a diagram showing the apparatus for manufacturing the separator substrate according to an aspect of the present disclosure. FIG. 2 shows the extrusion unit 1 and the cooling unit 2, and in this instance, the cooling unit cools the polymer sheet extruded through the T-die 200 on the casting roll 201 and in this instance, the touch roll is absent on one surface of the polymer sheet to cool in air.

According to an aspect of the present disclosure, the polymer sheet obtained by extrusion is cooled in different cooling conditions of two surfaces, leading to different surface morphology of two surfaces of the obtained polymer sheet, to obtain the polymer sheet having different surface roughness of two surfaces. To this end, the method for manufacturing the separator substrate of the present disclosure is characterized by cooling the polymer sheet obtained through the step S1 while one surface is in contact with the casting roll without the touch roll on the other surface.

The separator substrate obtained by the above-described method may have a relatively smooth surface on the cooled side in contact with the casting roll, and a relatively rough surface on the cooled side in contact with air without contact with the touch roll. Accordingly, the porous polymer substrate having different surface roughness of two surfaces may be obtained.

Hereinafter, each step of the method for manufacturing the separator substrate according to an aspect of the present disclosure will be described in detail.

First, in an embodiment of the present disclosure, the step S1) of extruding the polymer slurry to obtain the polymer sheet may include performing melt extrusion of a polymer resin as a raw material.

In an embodiment of the present disclosure, the polymer resin may include any type of polymer resin that may be used as the raw material for manufacturing the separator substrate without limitation. The raw material for manufacturing the separator substrate may include any type of resin, for example, polyolefin, polyethyleneterephthalate, polybutyleneterephthalate, polyacetal, polyamide, polycarbonate, polyimide, polyetheretherketone, polyethersulfone, polyphenylene oxide, polyphenylene sulfide, polyethylenenaphthalate or a mixture thereof. The polyolefin resin is formed by polymerization of olefin, and is a polymer produced from an olefin commonly used in the separator substrate as a monomer. For example, the polyolefin resin may include polyethylene; polypropylene; polybutylene; polypentene; polyhexene; polyoctene; a homopolymer of a monomer selected from ethylene, propylene, butene, pentene, 4-methylpentene, hexene, and octene; a copolymer of two or more of them; or a mixture thereof, but is not limited thereto.

In an embodiment of the present disclosure, the porous polymer substrate may be a polyolefin substrate.

In an embodiment of the present disclosure, the porous polymer substrate may be a polyethylene substrate.

In an embodiment of the present disclosure, the commonly used diluent may be used to extrude the polymer resin fed into an extruder. The diluent may include liquid or solid paraffin oil, wax and soybean oil, commonly used to manufacture the separator.

In an embodiment of the present disclosure, for the melting and extrusion, the commonly used single or twin screw extruder may be used, but is not limited thereto. In an embodiment of the present disclosure, a mixture of the diluent and the polymer resin may be fed into the extruder, followed by melting and mixing the polymer resin at high temperature to obtain a molten composition.

In an embodiment of the present disclosure, because the extrusion of the polymer sheet is performed at high temperature, for example, from 150°C to 300°C, the polymer sheet extruded through the extrusion unit may have, for example, high surface temperature of from 130°C to 200°C immediately after the extrusion, and the polymer sheet having the aforementioned surface temperature contacts the casting roll. In an embodiment of the present disclosure, the temperature of the casting roll may be, for example, from 20°C to 45°C, from 25°C to 45°C, from 35°C to 45°C, or 25°C, but the present disclosure is not limited thereto.

In an embodiment of the present disclosure, the step S2 may be a step of cooling two surfaces of the polymer sheet in different environments to make surface roughness of the two surfaces different, but the present disclosure is not limited thereto.

Subsequently, the method for manufacturing the separator substrate according to an aspect of the present disclosure may further include, after the cooling step S2, the step S3) of stretching and heat-setting the polymer sheet formed through the casting roll.

In an embodiment of the present disclosure, the stretching may include stretching the polymer sheet in the same direction or different directions. For example, the stretching may include stretching the polymer sheet in a direction parallel to each of machine direction (MD) and/or transverse direction (TD) independently.

The 'machine direction' as used herein refers to a direction parallel to a direction in which the process [extrusion->forming->stretching...] proceeds in the process of manufacturing the separator substrate. The machine direction can be identified through fiber orientation in the polymer of the separator substrate, and is a direction parallel to the fiber orientation. Accordingly, the 'transverse direction' refers to a direction perpendicular to the machine direction. The transverse direction may be a direction perpendicular to the fiber orientation in the polymer of the separator substrate.

In an embodiment of the present disclosure, the stretching may be, for example, performed by roll type, tenter type sequential or simultaneous stretching.

In an embodiment of the present disclosure, the stretching may be each, for example, performed at a stretch ratio of 3 times or more, or from 5 times to 12 times or from 6 times to 7 times. When the stretch ratio lies in the aforementioned numerical range, this may have a beneficial effect on thickness uniformity of the manufactured separator substrate and balanced properties between machine direction and transverses direction, but the present disclosure is not limited thereto.

In an embodiment of the present disclosure, the method may include, after the stretching, the step of extracting the diluent from the stretched sheet to form pores, followed by heat-setting.

In an embodiment of the present disclosure, the extraction of the diluent may be performed using an organic solvent. The organic solvent may include high extraction efficiency and fast-drying solvents, and may suitably include, for example, methyl ethyl ketone, methylene chloride, hexane or a mixture thereof, but the present disclosure is not limited thereto.

In an embodiment of the present disclosure, the temperature at which the extraction is performed is not limited to a particular range and may include a temperature range in which the surface roughness of the porous substrate does not change.

In an embodiment of the present disclosure, after the stretching and the extraction of the diluent, the heat-setting may be performed to forcibly hold the porous sheet and remove the residual stress in the sheet. However, the purpose of the heat-setting is not limited thereto.

In an embodiment of the present disclosure, the heat-setting temperature may vary depending on the type of the polymer resin used to manufacture the separator substrate. The heat-setting temperature may be, for example, from 100°C to 180°C, specifically from 110°C to 150°C, more specifically from 120°C to 140°C, for example, 130°C, but the present disclosure is not limited thereto.

In an embodiment of the present disclosure, in the heat-setting process, heat may be applied while monoaxially stretching in MD or TD direction, or biaxially stretching in MD and TD direction, but is not limited thereto.

The separator substrate obtained by the above-described manufacturing method according to an aspect of the present disclosure is a porous polymer substrate having different surface roughness of two surfaces.

In an embodiment of the present disclosure, the surface roughness of two surfaces of the separator substrate may be, for example, determined through a surface roughness value Sa. For example, the porous polymer substrate having different surface roughness of two surfaces may be a porous polymer substrate having different surface roughness values Sa of two surfaces.

In an embodiment of the present disclosure, the surface roughness value Sa may be measured through surface analysis of the porous polymer substrate using atomic force microscopy (AFM). For example, a sample of size 50 $\mu$m X 50 $\mu$m was obtained from the porous polymer substrate of which surface roughness is to be measured, and surface characteristics of each of two surfaces of a 30 $\mu$m X 30 $\mu$m area are repeatedly measured. In this instance, the surface roughness value Sa is measured through analysis of a difference from the average height across the entire surface based on the average height of the surface.

In an embodiment of the present disclosure, the porous polymer substrate may have different surface roughness values Sa of two surfaces, and the surface roughness value Sa of one surface may be, for example, 50 nm or less, and the surface roughness value Sa of the other surface may be more than 50 nm.

In an embodiment of the present disclosure, when the surface roughness of two surfaces of the porous polymer substrate, i.e., the separator substrate is different, surface characteristics of two surfaces of the separator using the same are different, and accordingly the adhesion strength between two surfaces of the separator and the electrode is different. In particular, when the surface roughness value Sa of one surface of the separator substrate is 50 nm or less, this may be advantageous for the adhesion strength with the negative electrode, and when the surface roughness value Sa of the other surface is more than 50 nm, this may be advantageous for the adhesion strength with the positive electrode.

In an embodiment of the present disclosure, the surface roughness value Sa of one surface of the separator substrate may be, for example, from 30 nm to 45 nm or from 35 nm to 40 nm. Additionally, the surface roughness value Sa of the other surface of the separator substrate may be, for example, from 60 nm to 90 nm, from 70 nm to 85 nm or from 75 nm to 80 nm.

Hereinafter, the configuration of the porous polymer substrate will be described by way of example. However, the porous substrate is not limited to the components described below.

In an embodiment of the present disclosure, the porous polymer substrate refers to a substrate having pores therein, as a porous ion-conducting barrier that prevents electrical contact between the negative electrode and the positive electrode and allows ions to pass through. The pores are connected to each other to allow gases or liquids to pass from one side of the substrate to the other side.

In an embodiment of the present disclosure, the porous polymer substrate may include a porous polymer film including a thermoplastic resin to provide a shut-down function. Here, the shut-down function refers to a function in which when the battery temperature is high, the thermoplastic resin melts to block the pores of the porous polymer substrate and stop ion migration, thereby preventing thermal runaway in the battery.

In an embodiment of the present disclosure, the thickness of the porous polymer substrate is not limited to a particular range so long as the aforementioned range based on the total thickness of the separator is satisfied, but may range, for example, from 5 $\mu$m to 300 $\mu$m, specifically from 5 $\mu$m to 100 $\mu$m, from 5 $\mu$m to 50 $\mu$m, from 5 $\mu$m to 20 $\mu$m, from 5 $\mu$m to 15 $\mu$m or from 9 $\mu$m to 12 $\mu$m.

In an embodiment of the present disclosure, the "thickness" of the porous polymer substrate may be measured by the commonly used method for measuring the thickness of each component of the separator. For example, the thickness of the porous polymer substrate may be measured using the commonly used thickness measuring instrument, for example, the commercially available thickness measuring instrument (Mitutoyo, VL-50S-B).

## Separator

According to an aspect of the present disclosure, the above-described porous polymer substrate may be provided as a separator.

According to another aspect of the present disclosure, there may be provided a separator including the above-described porous polymer substrate as a separator substrate and a porous coating layer formed on each of two surfaces of the separator substrate and including inorganic particles and a binder polymer.

The porous coating layer includes a large amount of inorganic particles to improve safety of the separator and the binder polymer to hold the inorganic particles together. The binder polymer may provide the separator surface with the ability to stick, and due different surface roughness of two surfaces of the separator substrate, when the porous coating layer is formed on the surface of the separator substrate, adhesion strength of two surfaces of the separator may be different from each other.

In an embodiment of the present disclosure, the separator may be characterized in that the adhesion strength of two surfaces is different from each other. Because the adhesion strength of two surfaces of the separator is different from each other, the separator may have high adhesion strength with not only the negative electrode having a relatively high adhesion strength but also the positive electrode having a relatively low adhesion strength.

In an embodiment of the present disclosure, when the surface of the separator having higher adhesion strength is referred to as a first surface and the surface having lower adhesion strength is referred to as a second surface, a ratio of adhesion strength of the first surface and the second surface according the following Equation 1 may be, for example, 150% or more.

$$\text{Ratio of adhesion strength (\%)} = [(\text{the adhesion strength of the first surface/ the adhesion strength of the second surface}) \times 100] \qquad \text{[Equation 1]}$$

In an embodiment of the present disclosure, the adhesion strength may refer to the adhesion strength between the separator substrate and the porous coating layer, and may be measured by the following method.

The adhesion strength of the separator may be, for example, measured by the following method: sample the separator of which adhesion strength is to be measured into a width of 15 mm, and attach a target surface for adhesion strength measurement to a slide glass using a 18 mm-wide double-sided tape (3M) to bring them into contact with each other. Subsequently, peel strength between the separator substrate and the porous coating layer is measured using a UTM machine (Instron) in the conditions of 180°, 300 mm/min.

In an embodiment of the present disclosure, the ratio of adhesion strength according to the above Equation 1 may be, for example, 150% or more, 160% or more or 170% or more. For example, the ratio of adhesion strength may be from 150% to 200%, from 160% to 190%, from 170% to 180% or from 175% to 180%, but the present disclosure is not limited thereto. According to the present disclosure, the separator may have a large difference of adhesion strength of two surfaces, so even if the adhesion strength difference between the positive electrode and the negative electrode is large, the adhesion strength between the separator and the electrode may be maintained at a predetermined level, thereby reducing or preventing the bending of the electrode.

In an embodiment of the present disclosure, the adhesion strength of the first surface of the separator having higher adhesion strength may be, for example, more than 80 gf/15 mm, and the adhesion strength of the second surface having lower adhesion strength may be, for example, 80 gf/15 mm or less. Preferably, the adhesion strength of two surfaces of the separator may be 30 gf/15 mm or more.

In an embodiment of the present disclosure, the adhesion strength of the first surface of the separator may be, for example, from 85 gf/15 mm to 110 gf/15 mm, from 90 gf/15 mm to 105 gf/15 mm or from 95 gf/15 mm to 100 gf/15 mm. Additionally, the adhesion strength of the second surface of the separator may be, for example, from 30 gf/15 mm to 70 gf/15 mm, from 40 gf/15 mm to 60 gf/15 mm, or from 50 gf/15 mm to 60 gf/15 mm. When the adhesion strength of each of two surfaces of the separator lies in the aforementioned range, the separator may have high adhesion strength with each of the positive electrode and the negative electrode, but the present disclosure is not limited thereto.

In an embodiment of the present disclosure, because the adhesion strength of two surfaces of the separator is different from each other, considering the adhesion strength of the electrode according to the composition of the electrode, for example, the type of the active material and/or the type of the binder polymer, each of two surfaces of the separator that contact the positive electrode and/or the negative electrode may be determined.

For example, in an embodiment of the present disclosure, when the adhesion strength of the positive electrode is lower and the adhesion strength of the negative electrode is higher, the first surface of the separator having higher adhesion strength may contact the positive electrode in the manufacture of the electrode assembly, and the second surface of the separator having lower adhesion strength may contact the negative electrode in the manufacture of the electrode assembly.

For example, in another embodiment of the present disclosure, when the adhesion strength of the negative electrode is lower and the adhesion strength of the positive electrode is higher, the first surface of the separator having higher adhesion strength may contact the negative electrode in the manufacture of the electrode assembly, and the second surface of the separator having lower adhesion strength may contact the positive electrode in the manufacture of the electrode assembly.

In an embodiment of the present disclosure, the different adhesion strength of two surfaces of the separator originates from different surface roughness of two surfaces of the separator substrate, and for example, the separator may have higher adhesion strength of the surface of the separator substrate having a high surface roughness value, and lower adhesion strength of the surface of the separator substrate having a low surface roughness value. In this instance, the porous coating layer on each of two surfaces of the separator may be preferably formed so that strong/weak adhesion strength of the two surfaces of the separator does not go contrary to large/small surface roughness of the separator substrate.

Hereinafter, the configuration of the porous coating layer will be described by way of example. However, the configuration of the porous coating layer is not limited thereto.

In an embodiment of the present disclosure, the porous coating layer may include the inorganic particles and the binder polymer, and all or at least part of the surface of the inorganic particles may be coated by the binder polymer. In this instance, the inorganic particles are held together surface-to-surface and/or point-to-point by the medium of the binder polymer.

For example, the inorganic particles and the binder resin in the porous coating layer may be included at a weight ratio of from 99:1 to 1:99. Specifically, the inorganic particles and the binder resin in the porous coating layer may be included at the weight ratio of from 95:5 to 5:95, from 90:10 to 10:90, from 80:20 to 10:90, from 70:30 to 10:90, from 60:40 to 10:90, from 50:50 to 10:90, from 40:60 to 15:85, from 60:40 to 15:85, from 70:30 to 20:80, or 20:80. The porous coating layer has a structural feature of a porous layer in which a plurality of micropores is formed inside and the micropores are connected to each other to allow gases or liquids to pass from one side to the other side.

In an embodiment of the present disclosure, the porous coating layer may have a pore structure formed from pores or voids (interstitial volume) between the inorganic particles. The particle size or porosity (the ratio of pore volume) may be adjusted according to the particle size and particle size distribution. Through this structure, it is possible to increase the resistance to metallic impurities present in the electrode and suppress shrinkage of the porous polyolefin substrate, thereby enhancing safety of the electrochemical device.

In an embodiment of the present disclosure, the porous coating layer may include a plurality of nodes including the inorganic particles and the binder polymer that covers at least part of the surface of the inorganic particles; and at least one filament formed in the shape of thread from the binder polymer of the nodes, wherein the filament has a node connection part that extends from the node and connects the node to another node, and the node connection part has a 3D network structure formed by interconnection of the filaments originated from the binder polymer.

In an embodiment of the present disclosure, as described above, the porous coating layer may be formed through a Safety Reinforced Separator (SRS) manufacturing method, a Ceramic Coated Separator (CCS) manufacturing method, or any other known manufacturing method, but is not limited thereto.

In an embodiment of the present disclosure, the inorganic particles are not limited to a particular type and may include any type of inorganic particles that are electrochemically stable. That is, the inorganic particles that may be used in the present disclosure are not limited to a particular type and may include any type of inorganic particles in which oxidation and/or reduction reaction does not occur in the operating voltage range (*e.g.,* 0 to 5V vs Li/Li$^+$) of the electrochemical device applied. Non-limiting examples of the inorganic particles may include at least one of $BaTiO_3$, $Pb(Zr,Ti)O_3$ (PZT), $Pb_{1-x}La_xZr_{1-y}Ti_yO_3$ (PLZT, 0<x<1, 0<y<1), $Pb(Mg_{1/3}Nb_{2/3})O_3$-$PbTiO_3$ (PMN-PT), hafnia ($HfO_2$), $SrTiO_3$, $SnO_2$, $CeO_2$,

MgO, NiO, CaO, ZnO, $ZrO_2$, $SiO_2$, $Y_2O_3$, $Al_2O_3$, SiC or $TiO_2$.

In an embodiment of the present disclosure, the binder resin may include, for example, polyvinylidene fluoride-based resin (PVdF-based resin). In an embodiment of the present disclosure, the PVdF-based resin may include at least one of vinylidene fluoride homopolymer (i.e., polyvinylidene fluoride), copolymers of vinylidene fluoride with monomers polymerizable with the vinylidene fluoride or a mixture thereof. In an embodiment of the present disclosure, the monomer may include, for example, fluorinated monomers and/or chlorine-based monomers. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) and perfluoro(propylvinyl)ether (PPVE); perfluoro(1,3-dioxole); or perfluoro(2,2-dimethyl-1,3-dioxole) (PDD).

In an embodiment of the present disclosure, the porous coating layer on two surfaces of the separator may be formed with the same composition. Additionally, in another embodiment of the present disclosure, to further improve the adhesion strength of two surfaces of the separator, the porous coating layer may be formed with different composition. Specifically, the porous coating layer on two surfaces of the separator may be preferably formed with the same composition in view of production efficiency and cost savings, but the present disclosure is not limited thereto.

In an embodiment of the present disclosure, the porous coating layer is not limited to a particular thickness but so long as the aforementioned ratio range to the total thickness of the separator is satisfied, the thickness of the porous coating layer may be, for example, from 0.5 μm to 50 μm, specifically from 0.5 μm to 10 μm, from 0.5 μm to 5 μm or from 1.5 μm to 3 μm.

In an embodiment of the present disclosure, the thickness of the porous coating layer on two surfaces of the separator may be the same or different. In this instance, for the same influence of the surface characteristics of the separator substrate on the adhesion strength of the separator by the porous coating layer, the porous coating layer on two surfaces of the separator may preferably have the same thickness, but the present disclosure is not limited thereto.

Additionally, in an embodiment of the present disclosure, the separator having a small thickness may be advantageous for the energy density of the electrochemical device to which the separator is applied, and to this end, the porous coating layer may be preferably formed with a small thickness, for example, of from 0.5 μm to 5 μm or from 1.5 μm to 3 μm. In this instance, when the porous coating layers on two surfaces of the separator substrate have the same thickness, this may have a beneficial effect on thickness reduction of the separator, but the present disclosure is not limited thereto.

**Electrode assembly**

According to another aspect of the present disclosure, there is provided an electrode assembly including the above-described separator, and a positive electrode and a negative electrode, each formed on each of two surfaces of the separator.

In an embodiment of the present disclosure, the separator is characterized in that the adhesion strength of two surfaces is different from each other as described above.

In an embodiment of the present disclosure, when the adhesion strength of the positive electrode is lower than that of the negative electrode, the positive electrode may contact the surface of the separator having higher adhesion strength, and the negative electrode may contact the surface having lower adhesion strength.

In another embodiment of the present disclosure, when the adhesion strength of the negative electrode is lower than that of the positive electrode, the negative electrode may contact the surface of the separator having higher adhesion strength, and the positive electrode may contact the surface having lower adhesion strength.

Through this, the electrode assembly of the present disclosure is characterized by having different adhesion strength of two surfaces of the separator, leading to a small deviation of electrode adhesion strength of the separator with each of the positive electrode and the negative electrode even if the adhesion strength of the surface of the positive electrode and the negative electrode is different.

In an embodiment of the present disclosure, the deviation of electrode adhesion strength of the separator and each of the positive electrode and the negative electrode according to the following Equation 2 may be 10% or less.

[Equation 2]

$$\text{Deviation of electrode adhesion strength (\%)} = \left| \{1 - F_{(x)}/F_{(y)}\} \right| \times 100$$

In the above Equation 2,

$F_{(x)}$ is the electrode adhesion strength between the separator and the positive electrode, and $F_{(y)}$ is the electrode

**EP 4 693 692 A1**

adhesion strength between the separator and the negative electrode, or

$F_{(x)}$ is the electrode adhesion strength between the separator and the negative electrode, and $F_{(y)}$ is the electrode adhesion strength between the separator and the positive electrode.

In an embodiment of the present disclosure, the electrode adhesion strength may be measured by the following method: sample the electrode and the separator of which adhesion strength is to be measured into a width of 25 mm and stack them, and apply pressure in the conditions of 60°C, 6.5 MPa, 1s to make a sample, and subsequently, measure peel strength between the separator and the electrode in the condition of 180°, 300 mm/min using a UTM machine (Instron).

In an embodiment of the present disclosure, when the separator using the separator substrate is applied, it may be possible to reduce the deviation of electrode adhesion strength with the positive electrode and the negative electrode, thereby reducing or preventing the bending of the electrode, and improving safety and process efficiency of the electrochemical device using the same.

In an embodiment of the present disclosure, the deviation of electrode adhesion strength according to the above Equation 2 may be, for example, 10% or less, 8% or less, 6% or less, 5% or less, 4.5% or less, 4% or less, 3% or less, 2% or less, 1% or less or 0% (no deviation).

Hereinafter, the configuration of the electrode will be described by way of example. However, the present disclosure is not limited thereto.

In an embodiment of the present disclosure, each of the positive electrode and the negative electrode may include a current collector and a coating of electrode active material on the current collector, and is not limited to a particular size or shape.

In an embodiment of the present disclosure, the positive electrode active material may include, for example, lithium transition metal oxide; lithium metal iron phosphate; lithium nickel-manganese-cobalt oxide; oxide with partial substitution of other transition metal in lithium nickel-manganese-cobalt oxide; or two or more of them, but is not limited thereto. Specifically, the positive electrode active material may include, for example, layered compounds such as lithium cobalt oxide ($LiCoO_2$), lithium nickel oxide ($LiNiO_2$) or compounds substituted with one or more transition metals; lithium manganese oxide of formula $Li_{1+x}Mn_{2-x}O_4$ (where x is 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni site lithium nickel oxide represented by formula $LiNi_{1-x}M_xO_2$ (where M = Co, Mn, Al, Cu, Fe, Mg, B or Ga, x = 0.01 to 0.3); lithium manganese composite oxide represented by formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); lithium metal phosphate $LiMPO_4$ (where M = Fe, Co, Ni, or Mn); lithium nickel-manganese-cobalt oxide $Li_{1+x}(Ni_aCo_bMn_c)_{1-x}O_2$ (x = 0 to 0.03, a = 0.3 to 0.95, b = 0.01 to 0.35, c = 0.01 to 0.5, a+b+c=1); oxide $Li_a[Ni_bCo_cMn_dAl_e]_{1-f}M1_fO_2$ with partial substitution of aluminum in lithium nickel-manganese-cobalt oxide (M1 is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, $0 \leq f \leq 0.1$); oxide $Li_{1+x}(Ni_aCo_bMn_cM_a)_{1-x}O_2$ with partial substitution of other transition metal in lithium nickel-manganese-cobalt oxide (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; $Fe_2(MoO_4)_3$, but is not limited thereto.

In an embodiment of the present disclosure, the negative electrode active material may include, for example, lithium metals or lithium alloys, soft carbon, hard carbon, natural graphite, Kish graphite, pyrolytic carbon, mesophase pitch based carbon fiber, meso-carbon microbeads, mesophase pitches, petroleum or coal tar pitch derived cokes, silicon (Si)-based compounds or a mixture thereof, but is not limited thereto.

In an embodiment of the present disclosure, the negative electrode may include a Si-based active material as the active material.

In an embodiment of the present disclosure, the negative electrode active material may include a silicon (Si)-based compound, and the silicon-based compound may include silicon-based particles.

In an embodiment of the present disclosure, the silicon-based particles may be, for example, (M)-SiOx (M=Li, Mg, Ca, Al or Ti, $0 \leq x < 2$). The (M)-SiOx may include a Si phase, a $SiO_2$ phase, a metal oxide phase and metal silicate phase or a mixture thereof, but the present disclosure is not limited thereto.

In an embodiment of the present disclosure, the negative electrode active material may include only Si particles.

## Electrochemical device

According to another aspect of the present disclosure, there may be provided an electrochemical device including the above-described electrode assembly and a case accommodating the electrode assembly.

In an embodiment of the present disclosure, the electrochemical device may include, for example, a primary battery, a secondary battery, a super capacitor, and an electric double layer capacitor. The secondary battery may be, more specifically, a lithium ion secondary battery.

In an embodiment of the present disclosure, the case may include any commonly used battery case, and is not limited to a particular shape according to the use of the battery. For example, the case may have a cylindrical, prismatic, pouch or coin shape using a can.

When the electrode assembly is completed as described above, the electrode assembly may be received in the case and the case may be sealed according to the commonly used method to manufacture the electrochemical device, and in this instance, the electrochemical device may be, for example, a lithium secondary battery.

Hereinafter, the present disclosure will be described in further detail through examples, but the following examples are provided for illustration purposes, and the scope of the present disclosure is not limited thereto.

**[Manufacture of separator substrate]**

A porous polymer substrate was manufactured as a separator substrate of each of Example 1 and Comparative Example 1 as below.

Comparative Example 1

A polyethylene polymer having the molecular weight of 600,000 (g/mol) and an antioxidant agent were mixed in an extruder, followed by melting in the temperature condition of 200°C and extrusion through a T-die, and cooling and shaping in a sheet shape on a casting roll having the surface temperature of 25°C and made of stainless steel. Cooling was performed with the cooling casting roll disposed on the upper surface of the polymer sheet and a touch roll disposed at a corresponding location on the lower surface (see FIG. 1). Subsequently, the polymer sheet having passed through the cooling casting roll was stretched in MD direction (stretch ratio 7 times, stretching temperature 115°C) and TD direction (stretch ratio 6 times, stretching temperature 125°C) using a tenter type sequential stretching machine at the rear of the casting roll, and a diluent was extracted using methylene chloride. Subsequently, the obtained polymer sheet was heat-set in the temperature condition of 130°C, to obtain a polymer substrate. The thickness of the obtained porous polymer substrate was 9 $\mu$m, and porosity was 45 vol%.

Example 1

A separator substrate was obtained by the same method as Comparative Example 1 except that cooling was performed while the cooling casting roll was disposed on the upper surface of the polymer sheet without the touch roll at the corresponding location on the lower surface (see FIG. 2). The thickness of the obtained porous polymer substrate was 9 $\mu$m, and porosity was 45 vol%.

**[Manufacture of separator]**

Using each of the as-prepared porous polymer substrates of Comparative Example 1 and Example 1 as a separator substrate, a separator was manufactured by forming a porous coating layer on two surfaces of the separator substrate by the following method.

Preparation of porous coating layer

A PVDF-HFP binder (Mw 500,000 g/mol, HFP 15 wt%) and inorganic particles were mixed in a proper solvent at a weight ratio of 80:20 to prepare a slurry for inorganic matter coating. The as-prepared slurry for inorganic matter coating was applied to the entire surface of the porous substrate by a dip coating method, and dried by a wet-phase separation method to form a porous coating layer to a thickness of 3 $\mu$m on each of the upper surface and the lower surface of the porous substrate.

Accordingly, a separator having the total thickness of 15 $\mu$m was manufactured.

**[Manufacture of electrode assembly]**

Each of the as-prepared separators was used as a separator, a negative electrode and a positive electrode were prepared as follows and each was attached to one surface of the separator to manufacture an electrode assembly.

Manufacture of negative electrode

Si particles (Si 100%) as a negative electrode active material, SBR as a binder polymer and CNT as a conductive material were mixed in distilled water as a solvent at a weight ratio of 80:10:10 to prepare a negative electrode composition.

The negative electrode composition was applied to one surface of a copper current collector and dried to prepare a negative electrode. The loading amount of the negative electrode was 8.5 mAh/cm$^2$.

Manufacture of positive electrode

NCMA(Li[Ni$_{0.86}$Co$_{0.06}$Mn$_{0.07}$Al$_{0.01}$]O$_2$) as a positive electrode active material, PVDF as a binder polymer and CNT as a conductive material were mixed in NMP as a solvent at a weight ratio of 97:1:2 to prepare a positive electrode composition.
The positive electrode composition was applied to one surface of an aluminum current collector and dried to prepare a positive electrode. The loading amount of the positive electrode was 4.5 mAh/cm$^2$.

Assembling of electrode assembly

The as-prepared separator was interposed between the positive electrode and the negative electrode such that the positive electrode and the negative electrode are placed in contact with the opposite surfaces of the separator, and rolled and dried in the conditions of 70°C, 9 MPa, 1 sec to obtain an electrode assembly.

**[Evaluation of properties]**

For each of the separator substrate, the separator and the electrode assembly in the manufacturing order, properties were evaluated by the following method and the results are shown in TABLE 2 below.
In the following TABLE 1, two surfaces of the separator substrate are divided into surface A and surface B and the properties evaluation results are shown based on the surface A and surface B. When manufacturing the electrode assembly, the negative electrode was attached in contact with surface A and the positive electrode was attached in contact with surface B, and the separator-electrode adhesion strength was evaluated while the negative electrode was attached in contact with surface A and the positive electrode was attached in contact with surface B.

Measurement of surface roughness Sa of separator substrate

Surface analysis of the porous polymer substrate was performed using atomic force microscopy (AFM). A height map of a surface was obtained and surface roughness Sa was measured by analyzing a difference from the average height across the entire surface based on the average height of the surface.
The surface roughness measurement was performed on the two surfaces of the separator substrate.

Measurement of adhesion strength of separator

The separator was sampled into a width of 15 mm and a target surface for adhesion strength measurement was attached to a slide glass using a 18 mm-wide double-sided tape (3M) to bring them into contact with each other. Subsequently, peel strength between the separator substrate and the porous coating layer was measured using a UTM machine (Instron) in the conditions of 180°, 300 mm/min.
The adhesion strength measurement was performed on the two surfaces of the separator.

Measurement of electrode adhesion strength between separator and electrode

The electrode and the separator were sampled into a width of 25 mm and stacked, and pressure was applied in the conditions of 60°C, 6.5 MPa, 1s to make a sample. Subsequently, peel strength between the separator and the electrode was measured using a UTM (Instron) in the condition of 180°, 300 mm/min.
The electrode adhesion strength measurement was performed on the separator and the positive electrode and the separator and the negative electrode.
After measuring the properties as described above, the ratio of adhesion strength of two surfaces of the separator and the deviation of separator-electrode adhesion strength were calculated according to the following equation and the values are shown in TABLE 1 below.

[Equation 1] Ratio of adhesion strength (%) = [(the adhesion strength of the first surface / the adhesion strength of the second surface) $\times$ 100]    [Equation 1]

In this instance, the first surface is a surface having higher adhesion strength, and the second surface is a surface having lower adhesion strength.

[Equation 2]

$$\text{Deviation of electrode adhesion strength (\%)} = \left| \{1 - F_{(x)}/F_{(y)})\} \right| \times 100$$

In this instance, $F_{(x)}$ was substituted with the electrode adhesion strength between the separator and the negative electrode, and $F_{(y)}$ was substituted with the electrode adhesion strength between the separator and the positive electrode.

[TABLE 1]

| | | Example 1 | Comparative Example 1 |
|---|---|---|---|
| Separator substrate | Surface roughness (Sa) of surface A | 37.1 nm | 34.2 nm |
| | Surface roughness (Sa) of surface B | 78.4 nm | 36.5 nm |
| Separator | Adhesion strength (gf/15mm) of surface A | 55 | 52 |
| | Adhesion strength (gf/15mm) of surface B | 98 | 54 |
| | Ratio of adhesion strength | 178.1% | 103.8% |
| Electrode assembly | Surface A-negative electrode adhesion strength (gf/25 mm) | 81 | 78 |
| | Surface B-positive electrode adhesion strength (gf/25 mm) | 85 | 41 |
| | Deviation of electrode adhesion strength | 4.7% | 90.2% |

As can be seen from TABLE 1 above, using the separator substrate having different surface roughness values of two surfaces according to an aspect of the present disclosure, the adhesion strength of two surfaces of the separator is different from each other, and through this, the deviation of adhesion strength between the positive electrode and the negative electrode may be dramatically reduced.

[List of Reference Numerals]

1 - Extrusion unit
2 - Cooling unit
200 - T-die
201 - Casting roll
202 - Touch roll
203 - Guide roll

**Claims**

1. A separator substrate which is a porous polymer substrate having different surface roughness of two surfaces.

2. The separator substrate according to claim 1, wherein surface roughness values (Sa) of the two surfaces of the porous polymer substrate are different from each other.

3. The separator substrate according to claim 1, wherein the surface roughness value (Sa) of one of the two surfaces of the porous polymer substrate is 50 nm or less, and the surface roughness value (Sa) of the opposite surface is larger than 50 nm.

4. A separator comprising:

   the separator substrate according to claim 1; and
   a porous coating layer present on each of the two surfaces of the separator substrate, the porous coating layer including inorganic particles and a binder polymer.

5. The separator according to claim 4, wherein the separator has different adhesion strength of two surfaces,

wherein when the surface having higher adhesion strength is referred to as a first surface, and the surface having lower adhesion strength is referred to as a second surface, a ratio of adhesion strength of the first surface and the second surface according to the following Equation 1 is 150% or more:

Ratio of adhesion strength (%) = [(the adhesion strength of the first surface/ the adhesion strength of the second surface) $\times$ 100]   [Equation 1]

wherein the adhesion strength is the adhesion strength between the separator substrate and the porous coating layer.

6. The separator according to claim 4, wherein an adhesion strength of each of the two surfaces of the separator is 30 gf/15 mm or more.

7. The separator according to claim 6, wherein the adhesion strength of one of the two surfaces of the separator is 80 gf/15 mm or less, and the adhesion strength of the opposite surface is more than 80 gf/15 mm, and
wherein the adhesion strength is the adhesion strength between the separator substrate and the porous coating layer.

8. An electrode assembly comprising:

the separator according to any one of claims 4 to 6; and
a positive electrode and a negative electrode, each electrode present on each of the two surfaces of the separator.

9. The electrode assembly according to claim 8, wherein the separator has different adhesion strength of the two surfaces, and
wherein the positive electrode contacts the surface having higher adhesion strength, and the negative electrode contacts the surface having lower adhesion strength.

10. The electrode assembly according to claim 8, wherein a deviation of electrode adhesion strength of the separator with each of the positive electrode and the negative electrode according to the following Equation 2 is 10% or less:

[Equation 2]

$$\text{Deviation of electrode adhesion strength (\%)} = \left| \{1 - F_{(x)}/F_{(y)})\} \right| \times 100$$

wherein in the above Equation 2,
$F_{(x)}$ is the electrode adhesion strength between the separator and the positive electrode, and $F_{(y)}$ is the electrode adhesion strength between the separator and the negative electrode, or
$F_{(x)}$ is the electrode adhesion strength between the separator and the negative electrode, and $F_{(y)}$ is the electrode adhesion strength between the separator and the positive electrode.

11. The electrode assembly according to claim 8, wherein the negative electrode includes a Si-based active material as an active material.

12. An electrochemical device comprising:

the electrode assembly according to claim 8; and
a case accommodating the electrode assembly.

13. A method for manufacturing a separator substrate, the method comprising the steps of:

S1) extruding a polymer slurry to obtain a polymer sheet; and
S2) placing the obtained polymer sheet on a casting roll and cooling the polymer sheet,
wherein the step S2 comprises cooling the polymer sheet without a touch roll on an opposite surface to a surface of the polymer sheet that contacts the casting roll.

FIG. 1

FIG. 2

## INTERNATIONAL SEARCH REPORT

| | International application No. |
|---|---|
| | **PCT/KR2024/010645** |

| A. | CLASSIFICATION OF SUBJECT MATTER |
|---|---|

**H01M 50/489**(2021.01)i; **H01M 50/446**(2021.01)i; **H01M 50/449**(2021.01)i; **H01M 50/46**(2021.01)i; **H01M 50/403**(2021.01)i

According to International Patent Classification (IPC) or to both national classification and IPC

| B. | FIELDS SEARCHED |
|---|---|

Minimum documentation searched (classification system followed by classification symbols)

H01M 50/489(2021.01); B32B 27/20(2006.01); B32B 5/18(2006.01); B32B 7/14(2006.01); H01M 10/052(2010.01); H01M 50/40(2021.01); H01M 50/409(2021.01); H01M 8/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 분리막(separator), 거칠기(roughness), 다공성(porous)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-193613 A (SUMITOMO CHEMICAL CO., LTD.) 17 November 2016 (2016-11-17)<br>See paragraphs [0016]-[0069] and claims 1-2. | 1-8 |
| Y | | 9-13 |
| Y | KR 10-2019-0000589 A (LG CHEM, LTD.) 03 January 2019 (2019-01-03)<br>See paragraph [0068]. | 9-10 |
| Y | KR 10-2021-0106274 A (LG CHEM, LTD.) 30 August 2021 (2021-08-30)<br>See paragraphs [0090]-[0113] and claim 5. | 11-13 |
| A | KR 10-2016-0041496 A (LG CHEM, LTD.) 18 April 2016 (2016-04-18)<br>See paragraphs [0012]-[0065]. | 1-13 |
| A | JP 2002-134129 A (NOK CORP.) 10 May 2002 (2002-05-10)<br>See paragraphs [0024]-[0034]. | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 October 2024** | **31 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/010645** |

| Patent document cited in search report | | | Publication date (day/month/year) | Patent family member(s) | | | Publication date (day/month/year) |
| --- | --- | --- | --- | --- | --- | --- | --- |
| JP | 2016-193613 | A | 17 November 2016 | None | | | |
| KR | 10-2019-0000589 | A | 03 January 2019 | CN | 109119666 | A | 01 January 2019 |
| | | | | CN | 109119666 | B | 21 February 2020 |
| | | | | CN | 208298945 | U | 28 December 2018 |
| | | | | EP | 3503278 | A1 | 26 June 2019 |
| | | | | EP | 3503278 | A4 | 30 October 2019 |
| | | | | EP | 3503278 | B1 | 17 June 2020 |
| | | | | JP | 2020-514946 | A | 21 May 2020 |
| | | | | JP | 6744061 | B2 | 19 August 2020 |
| | | | | KR | 10-2054467 | B1 | 11 December 2019 |
| | | | | PL | 3503278 | T3 | 19 October 2020 |
| | | | | US | 11438998 | B2 | 06 September 2022 |
| | | | | US | 2019-0215944 | A1 | 11 July 2019 |
| | | | | WO | 2018-236033 | A1 | 27 December 2018 |
| KR | 10-2021-0106274 | A | 30 August 2021 | None | | | |
| KR | 10-2016-0041496 | A | 18 April 2016 | KR | 10-1838652 | B1 | 14 March 2018 |
| JP | 2002-134129 | A | 10 May 2002 | JP | 4348501 | B2 | 21 October 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20230097767